# EUROPEAN PATENT SPECIFICATION

(11) **EP 0 471 716 B1**
(45) Date of publication and mention of the grant of the patent: **10.03.1993**
(21) Application number: 90907068.2
(22) Date of filing: 10.05.1990
(51) Int. Cl.: B01J 8/14

(54) **MULTI-STAGE VORTEX REACTOR**
MEHRSTUFIGER VORTEXREAKTOR
REACTEUR A TOURBILLONS A PLUSIEURS ETAGES

(30) Priority: 12.05.1989 US 351822
(43) Date of publication of application: 26.02.1992
(73) Proprietor: A. AHLSTROM CORPORATION, 29600 Noormarkku (FI)
(72) Inventor: TANG, John, T., San Diego, CA 92129 (US)
(74) Representative: Füchsle, Klaus, Dipl.-Ing.
(86) International application number: FI9000128
(87) International publication number: WO9013360

(56) References cited:
- DE-A-35 200 32
- US-A- 4 736 527

## Description

### BACKGROUND OF THE INVENTION

The present invention relates to vortex reactors and pertains particularly to an improved method and apparatus for enhancing the process reaction between gases and reactants (in the form of particles or liquid droplets) and for maintaining the mixture out of contact with walls of the vortex reactor, said reactors conventionally comprising
- a partition in the gas inlet duct for dividing the gas stream into a first gas stream and a second gas stream;
- a reactor housing having a peripheral wall defining an elongated generally cylindrical vortex chamber and having an inlet end at an upper part and an outlet end at a lower part;
- a first inlet duct connected to an inlet in the upper end of the reactor housing for introducing the first gas stream into the vortex chamber;
- a fluid injector in the upper end of the reactor housing for introducing a fluid stream into the first gas stream in the vortex chamber and
- an outlet duct in the outlet end of the reactor housing for continuously removing gas from the vortex chamber.

The present invention also relates to a method of mixing a fluid stream into a gas stream, utilizing a vortex reactor, having a reactor housing defining a vortex chamber with a generally cylindrical peripheral wall, an inlet end and an outlet end, by
- dividing a gas stream into at least a first and a second gas stream;
- introducing the first gas stream through an inlet duct into the vortex chamber at the upper end of the reactor housing;
- introducing a fluid stream into the vortex chamber at the upper end of the reactor housing for mixing the fluid stream into the first gas stream, and
- continuously removing gas from the vortex chamber through the outlet end.

Reactions between gases and particles or slurry droplets are common in many industrial processes. In many instances, the particles or slurry droplets are sticky and are troublesome, because they can stick to the reactor walls during the course of reaction and processing through the reactor. One prior art approach to reducing or eliminating this problem is the provision of very large reaction vessels to prevent the deposition of sticky particles on the reactor walls. Another approach is to apply very high energy to the slurry atomization in order to prevent the solid deposition from happening.

Current dry processes for flue gas desulfurization with atomized lime slurry require high energy for slurry atomization or a long reactor vessel to prevent the sticky lime slurry particles from depositing on the reactor wall and plugging up the reactor ducts.

It is, therefore, desirable that an improved reactor vessel and process be available for controlling the reaction between gases and reactants (in the form of particles or liquid droplets) that will prevent the particles from sticking to the vessel walls.

### SUMMARY AND OBJECTS OF THE INVENTION

It is, therefore, the primary object of the present invention to provide an improved reactor vessel and process for controlling the reaction between gases and reactants (in the form of particles or liquid droplets) in order to prevent the particles from sticking to the vessel walls.

In accordance with the primary aspect of the present invention, a vortex reactor is provided with
- an annular chamber surrounding the peripheral wall of the inlet end of the reactor housing;
- a second inlet duct for introducing the second gas stream into the annular chamber, said annular chamber providing a flow path for the second gas stream and
- inlet openings distributed axially along and angularly around said peripheral wall for introducing the second gas stream from the annular housing into the vortex chamber, said inlet openings being downstream from the inlet and having a guide plate for directing the second gas stream tangentially into the vortex chamber. The process, in accordance with the invention, includes
- directing the second gas stream into an annular chamber surrounding the peripheral wall of the inlet end of the reactor housing;
- introducing gas from the second gas stream in the annular housing through a plurality of openings distributed axially along and angularly around the peripheral wall into the vortex chamber and directing said second gas stream in said openings with guide plates to flow tangentially into the vortex chamber for creating a generally circular gas flow in the vortex chamber.

### BRIEF DESCRIPTION OF THE DRAWINGS

The above and other objects and advantages of the present invention will become apparent from the following description when read in conjunction with the drawings wherein:
Fig. 1 is a side elevation view schematically illustrating a multi-stage vortex reactor in accordance with the invention;
Fig. 2 is a top plan view in section schematically illustrating the gas flow and inlet arrangement in accordance with a first embodiment of the invention;
Fig. 3 is a top plan view in section schematically illustrating the gas movement in the reactor in accordance with the embodiment of Fig. 2;
Fig. 4 is a view like Fig. 2 of a second embodiment;
Fig. 5 is a view like Fig. 3 of the embodiment of Fig. 4;
Fig. 6 is a partial side elevation view in section illustrating another embodiment of the invention;
Fig. 7 is a view like Fig. 3 of the embodiment of Fig. 6; and
Fig. 8 is a view taken on line VIII-VIII of Fig. 6.

### DETAILED DESCRIPTION OF THE PREFERRED EMBODIMENTS

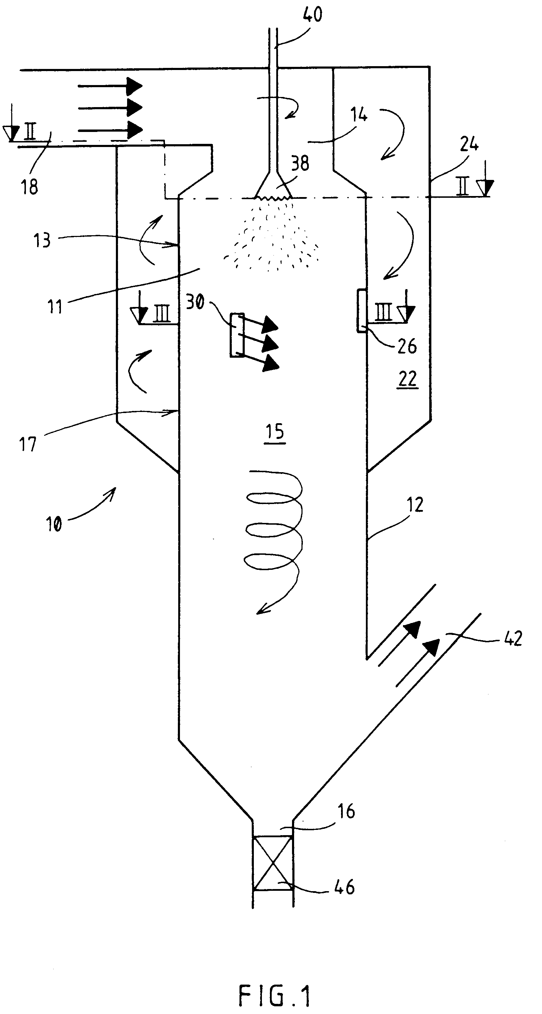

Referring now to Fig. 1 of the drawings, there is schematically illustrated a multi-stage vortex reactor, in accordance with the present invention, designated generally by the numeral 10. The reactor comprises an elongated cylindrical first housing 12, defining a reactor with a vortex chamber 15, having an inlet 14 at an upper end and an outlet duct 16 at a lower end. At the upper or inlet end 11 of the reactor, there is provided a first reactor gas inlet duct 18 for the introduction of a first stream of gas.

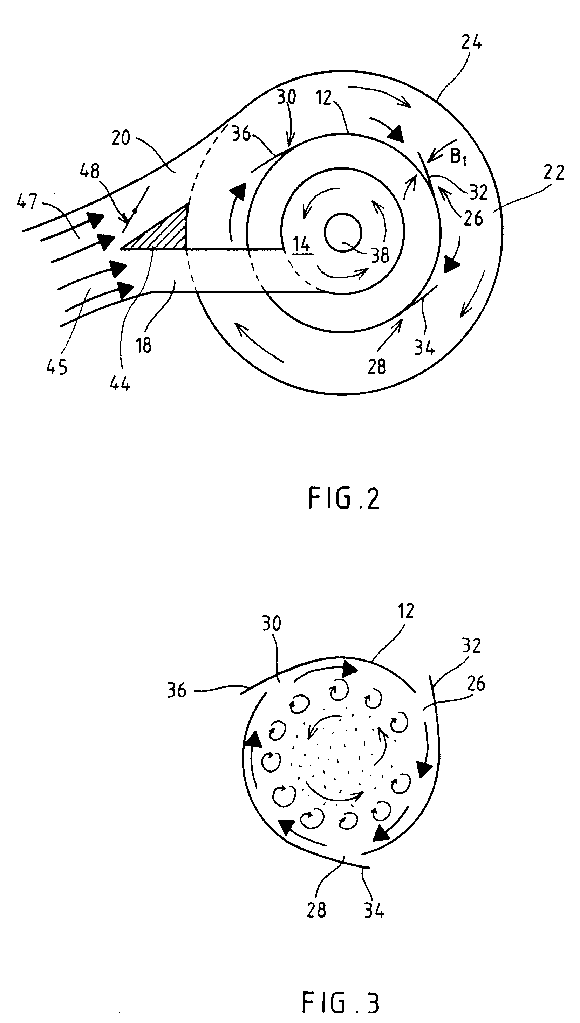

Referring to Fig. 2, the first stream of gas 45 enters via inlet duct 18 at a tangent to the circular opening of the inlet 14 in the upper end of the vortex chamber, causing the inlet gases to swirl around in a counter-clockwise direction. As also illustrated in Fig. 2, a second gas inlet duct 20 is provided for the introduction of a second gas 47 into an annular chamber 22, defined by an annular housing 24 surrounding the inlet end of the reactor housing. The annular chamber 22, defined by the outer housing 24, carries the second stream of gas in a swirling motion around the outside wall of the reactor housing 12, counter to the first inlet stream. The second gas stream 47 is in heat exchanger contact, with the peripheral wall 13 of the vortex chamber heating or cooling said wall. The second stream also flows axially along the reactor, wherein it enters the reactor at inlet openings 26, 28 and 30.

These inlet openings are staged circumferentially around and axially along the peripheral side wll 17, as illustrated in Figs. 1 and 2, such that the gas flows along and around the reactor prior to entering the housing. The inlets for the second gas stream have inlet angle directing devices in the form of outward extending guide plates or baffles 32, 34, and 36 that direct the gas into the vortex chamber at a particular tangential angle for flowing around at least a part of inner walls of the vortex chamber, which aids in controlling the rate of outer movement of the solid or slurry particles within the reactor chamber. Additionally, the second gas stream exchanges heat to the peripheral wall and raises the wall temperature that prevents sticky particles or fluid droplets from depositing at the wall.

Referring still to Fig. 1, a fluid injector 38 at the center inlet of the vortex chamber introduces a fluid liquid or a slurry into the chamber from a suitable source via a conduit 40. This slurry is mixed with and carried along with the first stream of gases that enters the vortex chamber via inlet duct 18 and flow in a counterclockwise direction in the chamber. Other gases, liquids, or solid particles may also be introduced into the chamber at this point. The term "fluid" includes gases and liquids which may or may not contain solid particles. The second stream of gas that enters the chamber is introduced at the outer surface of the chamber flowing along the wall (Fig. 3) in the opposite direction, separating the first stream and the sticky slurry particles form the inner surface of the wall until the particles have dried and moved substantially to the bottom of the reactor. As shown in Fig. 3, the counter flowing streams create small swirling currents between them as they flow along the chamber of the reactor. This counter flow arrangement prevents sticky liquid or slurry droplets from reaching the reactor wall.

At the bottom of the reactor, there is provided a solid outlet 16 (Fig. 1) and a gas outlet duct 42 for drawing of the cleaned gas from the stream. Solids that have been separated from the gases drop to the bottom of the reactor and are drawn off through a suitable rotary valve 46 in the solids outlet duct 16, as illustrated.

A damper 48 and a partition 44 in the inlet duct control the proportion of the volume of the inlet gases 45, 47 between the inlet ducts 18 and 20. When the damper is in the unrestricted position, the division of flow will be in proportion to the size of the respective duct. When the damper 48 is in a restricted position partially across the duct passage, the flow in duct 20 will decrease and that in duct 18 will increase in proportion to the restriction. Thus, the damper may be used to adjust the flow split between the volume of first and second gas streams 45 and 47 in certain proportion for optimizing reactions as well as fluid mixing pattern in the reactor.

This structure and process enhance and promote the mixing between the gases introduced into the chamber and the slurry droplets and solid particles. The process creates a strong vortex of the gas and prolongs the contact and reactant residence time and prevents the sticky particles form reaching the reactor walls.

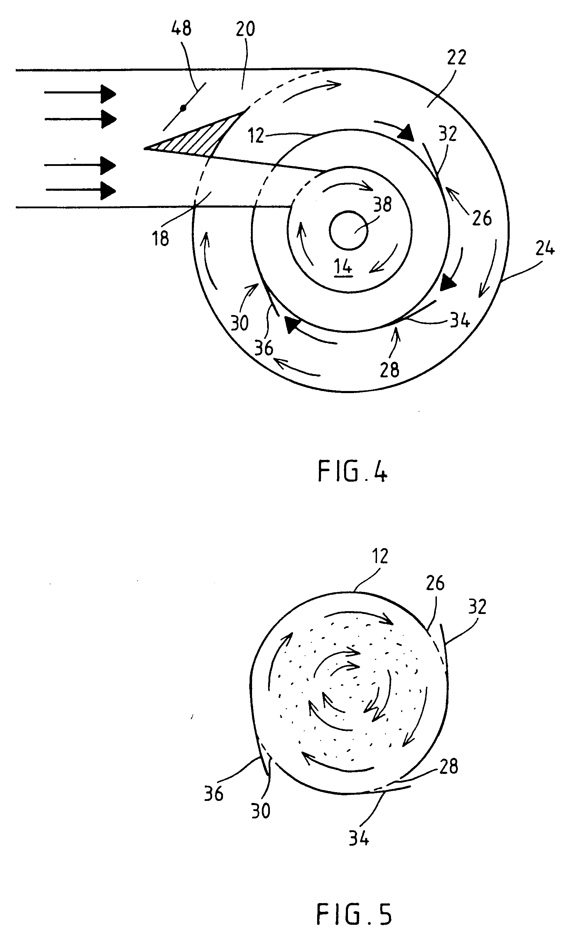

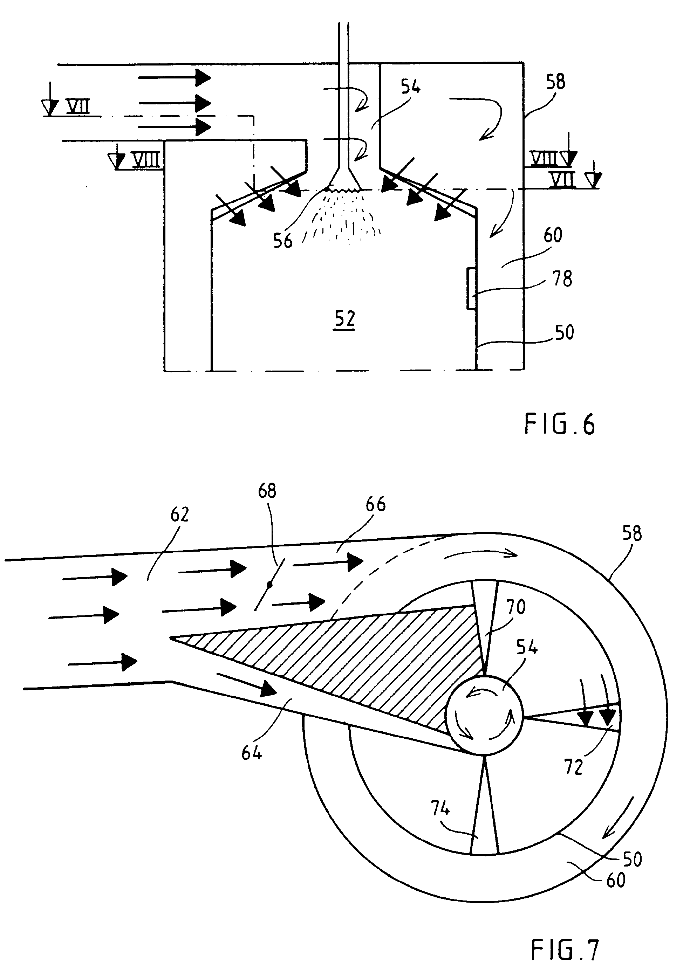

In other applications when there is a need to recover reactants upon completing the reaction, it is preferred to have both gas streams whirling in a similar direction in the reactor. Referring to Fig. 4, wherein like numbers identify the same elements and modifications are identified by the same numbers primed, a flow arrangement is illustrated wherein the gas flows from both gas inlet ducts are in the same direction. In this arrangement, the first inlet duct 18′ enters the circular opening of the inlet 14 of the vortex chamber on the same side as the second duct 20. Thus, the first and second streams are flowing in a common clockwise direction, with less turbulence as illustrated in Fig. 5. This approach promotes the particles' radial movement for their removal at the reactor bottom.

Referring to Fig. 6, a further embodiment is illustrated wherein a main housing 50, as in the previous embodiments, defines a vortex chamber 52 into which gases and the like are introduced. The vortex chamber has a first inlet 54 wherein a first gas stream is introduced, with a liquid or slurry injector 56 for introducing liquid or the like into the stream. The lower or bottom portion of the reactor is constructed the same as in the prior embodiments. An outer housing 58 forms an annular chamber 60 as in the prior embodiments.

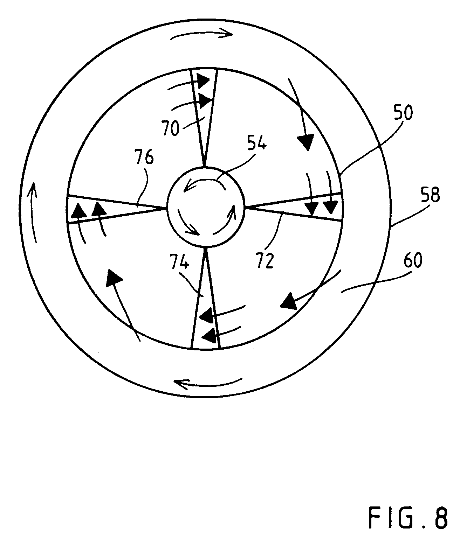

Referring to Fig. 7, a gas stream is introduced via a duct 62, which is split into ducts 64 and 66, with the first duct directing gases into the inlet 54, and the second introducing gas into the annular chamber 60. A damper 68 controls the flow between ducts 64 and 66. The roof of the housing 50 is provided with a plurality of triangular shaped inlet opening slots 70, 72, 74, and 76 (Fig. 8) into the chamber 52 from the uppermost part of the annular chamber 60. A portion of the gas stream entering chamber 60 flows through the opening slots 70-76, forming a stream of hot gas along the top of the chamber 52 protecting the surface of the top of the chamber from accumulation of reagent droplets. The remainder of the gas flows down along the annular chamber 60 along side of the chamber 52 along housing wall 50 and enters the chamber 52 via a plurality of inlets (only one 78 shown) as in the prior embodiments.

This apparatus and process can be applied to many chemical reaction processes in industry. One particular application is to flue gas desulfurization with injection of slurry droplets or the like. Another application of the reactor and of the process is that to processes involving gas and sticky particles reactions. This can include any number of different compositions of gas particles and the like.

Another process to which the present reactor and processes may be applied is that to the combustion of coal slurry fuel mixture in small furnaces.

In carrying out the process as above described, the steps include dividing the gas stream into a first portion directed directly to the reactor, and diverting a second portion of the gas to the reactor via wall inlets in the region where the solids and the droplets are being introduced to the reactor. The gas forms a strong vortex in its course of traveling downward and provides high slip velocity. Slip velocity is a relative velocity between gas and solid particles or slurry droplets. This promotes heat and mass transfer between the gas and reactor particles or slurry droplets, and helps to shorten the reaction time requirement as well as dry out time. Also the gas vortex prolongs particles or slurry droplets staying time in the reactor.

The second portion of the gas stream is directed toward the outer annular region of the reactor and enters the reactor via the various opening slots located axially along and radially along the reactor wall. This provides additional mixing and turbulence at various distances in the reactor down stream and prevents still sticky particles from reaching, adhering and depositing on the reactor walls.

The direction of the gas swirling in the upper region of the reactor from the second stream can be selected to be either in the same direction or opposite direction to that of the primary stream in the reactor. This could depend on a number of factors, including the types of process application, the degrees of particle stickiness and the desire for particle separation. With the opposite direction of entrance into the reactor, as shown in Figs. 2 and 3, a deposition of still sticky particles on the reactor wall can be avoided.

Referring to Fig. 4, it is seen that the primary gas duct is divided, as in the previous embodiment, with the gas streams moving however in the same clockwise direction in the reactor. In this arrangement, the primary stream is fed into the reactor to move in a clockwise direction, as shown in Fig. 4. The second gas stream, which is controlled by a damper for controlling the proportion of the volume between the first and second streams, is also introduced into the outer chamber in the same direction, wherein it moves along and enters the reaction chamber in the same direction, as shown in Fig. 5. This arrangement of the primary and secondary gas flow in the same direction aids in solids separation from the gas stream for its recovery or removal.

The Fig. 6-8 embodiment or feature of triangular slots or openings in the upper or inlet end wall of the reactor chamber can be embodied or combined with either Figs. 2 or 4 directions of flow. This feature can aid in controllig the outward velocity of the liquid and solids introduced into the chamber.

## Claims

1. A multi-stage vortex reactor, for enhancing the mixing of a fluid into a gas stream thereby forming a mixture and for maintaining the mixture out of contact with walls of the vortex reactor, comprising
- a partition (44) in the gas inlet duct for dividing the gas stream into a first gas stream (45) and a second gas stream (47);
- a reactor housing (12) having a peripheral wall (13) defining an elongated generally cylindrical vortex chamber (15) and having an inlet end (11) at an upper part and an outlet end at a lower part;
- a first inlet duct (18) connected to an inlet (14) in the upper end of the reactor housing for introducing the first gas stream (45) into the vortex chamber;
- a fluid injector (38) in the upper end of the reactor housing for introducing a fluid stream into the first gas stream in the vortex chamber and
- an outlet duct (42) in the outlet end of the reactor housing for continuously removing gas from the vortex chamber,
characterized by the vortex reactor further comprising
- an annular chamber (22) surrounding the peripheral wall (13) of the inlet end (11) of the reactor housing;
- a second inlet duct (20) for introducing the second gas stream (47) into the annular chamber, said annular chamber providing a flow part for the second gas stream and
- inlet openings (26, 28, 30) distributed axially along and angularly around said peripheral wall (13) for introducing the second gas stream from the annular housing into the vortex chamber, said inlet openings being downstream from the inlet (14) and having a guide plate (32, 34, 36) for directing the second gas stream tangentially into the vortex chamber.

2. A multi-stage vortex reactor as recited in claim 1 characterized by
- the first inlet duct (18) being arranged to introduce the first gas stream tangentially into the inlet (14), for giving the first gas stream a long residence time in the vortex chamber.

3. A multi-stage vortex reactor as recited in claim 1 characterized by
- the inlet openings (26, 28, 30) being vertical slots.

4. A multi-stage vortex reactor as recited in claim 1 characterized by
- the inlet openings (26, 28, 30) having a guide plate for directing the second gas stream into the vortex chamber counter to the flow of the first gas stream.

5. A multi-stage vortex reactor as recited in claim 1 characterized by
- a damper (46, 48) being disposed in a first or second gas inlet duct for regulating the proportion of first gas stream to second gas stream.

6. A method of mixing a fluid stream into a gas stream, utilizing a vortex reactor, having a reactor housing defining a vortex chamber with a generally cylindrical peripheral wall, an inlet end and an outlet end, by
- dividing a gas stream into at least a first and a second gas stream;
- introducing the first gas stream through an inlet duct into the vortex chamber at the upper end of the reactor housing;
- introducing a fluid stream into the vortex chamber at the upper end of the reactor housing for mixing the fluid stream into the first gas stream, and
- continuously removing gas from the vortex chamber through the outlet end,
characterized by
- directing the second gas stream into an annular chamber surrounding the peripheral wall of the inlet end of the reactor housing;
- introducing gas from the second gas stream in the annular housing through a plurality of openings distributed axially along and angularly around the peripheral wall into the vortex chamber and directing said second gas stream in said openings with guide plates to flow tangentially into the vortex chamber for creating a generally circular gas flow in the vortex chamber.

7. A method as recited in claim 6, characterized by the fluid stream being introduced into the middle of the circular gas flow in the vortex chamber at the inlet end of the reactor housing for providing good contact between fluid mixed into the gas flow.

8. A method as recited in claim 6, characterized by the second gas stream being introduced tangentially through a plurality of openings in the peripheral wall into the vortex chamber and substantially in the opposite direction to the gas flow in the vortex chamber for improving the mixing of gas and fluid.

9. A method as recited in claim 6, characterized by the fluid stream containing fine dispersed liquid droplets.

10. A method as recited in claim 6, characterized by the fluid stream containing fine dispersed solid particles.

11. A method as recited in claim 6, characterized by the fluid stream containing gaseous compounds.

12. A method as recited in claim 6, characterized by dividing the gas stream into a first larger gas stream and a second smaller gas stream in front of the inlet to the vortex chamber.

13. A method as recited in claim 6, characterized by introducing the second gas stream through openings in the peripheral wall into the vortex chamber for gradually contacting the second gas stream with the first gas stream.

## Patentansprüche

1. Mehrstufiger Vortex-Reaktor zur Verbesserung der Vermischung eines Fluids mit einem Gasstrom unter Bildung eines Gemisches und zur Fernhaltung des Gemisches von Kontakt mit den Wänden des Vortex-Reaktors, bestehend aus
- einer Trennwand (44) im Gaseintrittskanal zur Teilung des Gasstroms in einen ersten Gasstrom (45) und einen zweiten Gasstrom (47);
- einem Reaktorgehäuse (12) mit einer Umfassungswand (13), die eine längliche hauptsächlich zylindrische Vortex-Kammer (15) bildet und am oberen Teil ein Eintrittsende (11) und am unteren Teil ein Austrittsende aufweist;
- einem ersten Eintrittskanal (18) der mit einem Einlaß (14) im oberen Teil des Reaktorgehäuses verbunden ist zur Einführung des ersten Gasstroms (45) in die Vortex-Kammer;
- einem Fluidinjektor (38) am oberen Ende des Reaktorgehäuses zur Einführung eines Fluidstroms in den ersten Gasstrom in der Vortex-Kammer und
- einem Austrittskanal (42) am Austrittsende des Reaktorgehäuses für den kontinuierlichen bezug von Gas aus der Vortex-Kammer, dadurch **gekennzeichnet,** daß der Vortex-Reaktor ferner besteht aus
- einer Ringkammer (22), die die Umfassungswand (13) am Eintrittsende (11) des Reaktorgehäuses umgibt;
- einem zweiten Eintrittskanal (20) zur Einführung des zweiten Gasstroms (47) in die Ringkammer, wobei die genannte Ringkammer einen Strömungsweg für den zweiten Gasstrom bildet und
- Eintrittsöffnungen (26, 28, 30), die axial längs der genannten Umfassungswand (13) und winkelmäßig um sie herum verteilt sind zur Einführung des zweiten Gasstroms aus der Ringkammer in die Vortex-Kammer, wobei sich die genannten Eintrittsöffnungen stromabwärts vom Eintritt (14) befinden und ein Leitblech (32, 34, 36) zur Leitung des zweiten Gasstroms tangential in die Vortex-Kammer aufweisen.

2. Mehrstufiger Vortex-Reaktor gemäß Anspruch 1, dadurch **gekennzeichnet,** daß der erste Eintrittskanal (18) so angeordnet ist, daß er den ersten Gasstrom tangential in den Einlaß (14) leitet, um dem ersten Gasstrom eine lange Verweilzeit in der Vortex-Kammer zu geben.

3. Mehrstufiger Vortex-Reaktor gemäß Anspruch 1, dadurch **gekennzeichnet,** daß die Eintrittsöffnungen (26, 28, 30) vertikale Schlitze sind.

4. Mehrstufiger Vortex-Reaktor gemäß Anspruch 1, dadurch **gekennzeichnet,** daß die Eintrittsöffnungen (26, 28, 30) jeweils ein Leitblech zur Leitung des zweiten Gasstroms in die Vortex-Kammer entgegen der Strömungsrichtung des ersten Gasstroms aufweisen.

5. Mehrstufiger Vortex-Reaktor gemäß Anspruch 1, dadurch **gekennzeichnet,** daß eine Regelklappe (46, 48) in einem ersten oder zweiten Gaseintrittskanal zur Regulierung des Verhältnisses des ersten Gasstroms zum zweiten Gasstrom angeordnet ist.

6. Verfahren zur Vermischung eines Fluidstrom in einen Gasstrom unter Ausnutzung eines Vortex-Reaktors mit einem Reaktorgehäuse, das eine Vortex-Kammer mit einer hauptsächlich zylindrischen Umfassungswand bildet und ein Eintrittsende und ein Austrittsende hat, indem
- ein Gasstrom zumindest in einen ersten und einen zweiten Gasstrom aufgeteilt wird;
- der erste Gasstrom durch einen Eintrittskanal in die Vortex-Kammer am oberen Ende des Reaktorgehäuses geleitet wird;
- ein Fluidstrom in die Vortex-Kammer am oberen Ende des Reaktorgehäuses zur Vermischung des Fluidstroms mit dem ersten Gasstrom eingeführt wird, und
- Gas kontinuierlich aus der Vortex-Kammer durch das Austrittsende abgezogen wird, dadurch **gekennzeichnet,** daß
- der zweite Gasstrom in eine die Umfassungwand am Eintrittsende des Reaktorgehäuses umgebende Ringkammer geleitet wird;
- Gas aus dem zweiten Gasstrom ins Ringgehäuse durch eine Vielzahl axial längs und winkelmäßig rund um die Umfassungswand angeordnete Öffnungen in die Vortex-Kammer eingegeben wird und der genannte zweite Gasstrom in besagte Öffnungen mit Leitblechen geleitet wird, damit er tangential in die Vortex-Kammer fließt, um eine hauptsächliche kreisförmige Gasströmung in der Vortex-Kammer zu erzeugen.

7. Verfahren gemäß Anspruch 6, dadurch **gekennzeichnet,** daß der Fluidstrom in die Mitte des kreisförmigen Gasstroms in der Vortex-Kammer am Eintrittsende des Reaktorgehäuses eingeführt wird, um einen guten Kontakt mit dem dem Gasstrom beigemischten Fluid zu erhalten.

8. Verfahren gemäß Anspruch 6, dadurch **gekennzeichnet,** daß der zweite Gasstrom tangential durch eine Vielzahl Öffnungen in der Umfassungswand in die Vortex-Kammer und hauptsächlich in der zur Gasströmung in der Vortex-Kammer entgegengesetzten Richtung eingeführt wird, um das Vermischen von Gas und Fluid zu verbessern.

9. Verfahren gemäß Anspruch 6, dadurch **gekennzeichnet,** daß der Fluidstrom fein dispergierte Flüssigkeitströpfchen enthält.

10. Verfahren gemäß Anspruch 6, dadurch **gekennzeichnet,** daß der Fluidstrom fein dispergierte Feststoffpartikeln enthält.

11. Verfahren gemäß Anspruch 6, dadurch **gekennzeichnet,** daß der Fluidstrom gasförmige Verbindungen enthält.

12. Verfahren gemäß Anspruch 6, dadurch **gekennzeichnet,** daß der Gasstrom in einen ersten größeren Gasstrom und einen zweiten kleineren Gasstrom vor dem Eintritt in die Vortex-Kammer geteilt wird.

13. Verfahren gemäß Anspruch 6, dadurch **gekennzeichnet,** daß der zweite Gasstrom durch Öffnungen in der Umfassungswand in die Vortex-Kammer eingeführt wird, um allmählich mit dem ersten Gasstrom in Kontakt gebracht zu werden.

## Revendications

1. Réacteur à tourbillon à plusieurs étages, pour augmenter le mélange d'un fluide dans un courant de gaz de façon à former un mélange et pour maintenir le mélange hors de contact avec les parois du réacteur à tourbillon, comprenant
- une cloison (44) dans la conduite d'admission du gaz pour diviser le courant de gaz en un premier courant de gaz (45) et en un second courant de gaz (47) ;
- une enceinte de réacteur (12) ayant une paroi périphérique (13) définissant une chambre à tourbillon allongée généralement cylindrique (15) et comportant une extrémité d'admission (11) au niveau d'une partie supérieure et une extrémité de sortie au niveau d'une partie inférieure ;
- une première conduite d'admission (18) reliée à un orifice d'admission (14) dans l'extrémité supérieure de l'enceinte de réacteur pour introduire le premier courant de gaz (45) dans la chambre à tourbillon ;
- un injecteur de fluide (38) dans l'extrémité supérieure de l'enceinte du réacteur pour introduire un courant de fluide dans le premier courant de gaz dans la chambre à tourbillon et
- une conduite de sortie (42) dans l'extrémité de sortie de l'enceinte de réacteur pour éliminer de façon continue le gaz de la chambre à tourbillon,
caractérisé en ce que le réacteur à tourbillon comprend
- une chambre annulaire (22) entourant la paroi périphérique (13) de l'extrémité d'admission (11) de l'enceinte du réacteur ;
- une seconde conduite d'admission (20) pour introduire le second courant de gaz (47) dans la chambre annulaire, ladite chambre annulaire fournissant une part d'écoulement pour le second courant de gaz et
- des ouvertures d'admission (26, 28, 30) distribuées axialement le long et angulairement autour de ladite paroi périphérique (13) pour introduire le second courant de gaz de l'enceinte annulaire dans la chambre à tourbillon, lesdites ouvertures d'admission étant en aval de l'orifice d'admission (14) et présentant une plaque de guidage (32, 34, 36) pour diriger le second courant de gaz tangentiellement dans la chambre à tourbillon.

2. Réacteur à tourbillon à plusieurs étages selon la revendication 1 caractérisé en ce que
- la première conduite d'admission (18) est agencée pour introduire le premier courant de gaz tangentiellement dans l'orifice d'admission (14), pour donner au premier courant de gaz un long temps de séjour dans la chambre à tourbillon .

3. Réacteur à tourbillon à plusieurs étages selon la revendication 1 caractérisé en ce que
- les ouvertures d'admission (26, 28, 30) sont des fentes verticales.

4. Réacteur à tourbillon à plusieurs étages selon la revendication 1 caractérisé en ce que
- les ouvertures d'admission (26, 28, 30) ont une plaque de guidage pour diriger le second courant de gaz dans la chambre à tourbillon dans le sens contraire de l'écoulement du premier courant de gaz.

5. Réacteur à tourbillon à plusieurs étages selon la revendication 1 caractérisé en ce que
- un amortisseur (46,48) est disposé dans ou dans une seconde conduite d'admission de gaz pour réguler la proportion du premier courant de gaz par rapport au second courant de gaz.

6. Procédé de mélange d'un courant de fluide dans un courant de gaz, utilisant un réacteur à tourbillon, ayant une enceinte de réacteur définissant une chambre à tourbillon avec une paroi périphérique généralement cylindrique, une extrémité d'admission et une extrémité de sortie ,
- en divisant un courant de gaz en au moins un premier et un second courant de gaz ;
- en introduisant le premier courant de gaz par une conduite d'admission dans la chambre à tourbillon au niveau de l'extrémité supérieure de l'enceinte de réacteur ;
- en introduisant un courant de fluide dans la chambre à tourbillon au niveau de l'extrémité supérieure de l'enceinte de réacteur pour mélanger le courant de fluide dans le premier courant de gaz, et
- en éliminant de façon continue le gaz de la chambre à tourbillon par l'extrémité de sortie,
caractérisé par
- le fait de diriger le second courant de gaz dans une chambre annulaire entourant la paroi périphérique de l'extrémité d'admission de l'enceinte du réacteur ;
- le fait d'introduire le gaz issu du second courant de gaz dans l'enceinte annulaire par une pluralité d'ouvertures distribuées axialement le long de et angulairement autour de la paroi périphérique dans la chambre à tourbillon et de diriger ledit second courant de gaz dans lesdites ouvertures avec des plaques de guidage pour s' écouler tangentiellement dans la chambre à tourbillon pour créer un écoulement de gaz généralement circulaire dans la chambre à tourbillon.

7. Procédé selon la revendication 6, caractérisé en ce que le courant de fluide est introduit au milieu de l'écoulement de gaz circulaire dans la chambre à tourbillon au niveau de l'extrémité d'admission de l'enceinte du réacteur pour fournir un bon contact entre le fluide mélangé dans l'écoulement de gaz.

8. Procédé selon la revendication 6, caractérisé en ce qu'un second courant de gaz est introduit tangentiellement par une pluralité d'ouvertures dans la paroi périphérique dans la chambre à tourbillon et sensiblement dans la direction opposée à l'écoulement du gaz dans la chambre à tourbillon pour améliorer le mélange de gaz et de fluide.

9. Procédé selon la revendication 6, caractérisé en ce que le courant de fluide contient de fines gouttelettes de liquide dispersées.

10. Procédé selon la revendication 6, caractérisé en ce que le courant de fluide contient de fines particules solides dispersées.

11. Procédé selon la revendication 6, caractérisé en ce que le courant de fluide contient des composés gazeux.

12. Procédé selon la revendication 6, caractérisé par la division du courant de gaz en un premier courant de gaz plus grand et en un second courant de gaz plus petit en face de l'orifice d'admission à la chambre à tourbillon.

13. Procédé selon la revendication 6, caractérisé par l'introduction du second courant de gaz par les ouvertures dans la paroi périphérique dans la chambre à tourbillon pour mettre en contact progressivement le second courant de gaz avec le premier courant de gaz.
